# EUROPEAN PATENT APPLICATION

(11) **EP 4 818 777 A2**
(43) Date of publication of application: **07.10.2026**
(21) Application number: 26199870.2
(22) Date of filing: 02.08.2019
(51) Int. Cl.: G02B 6/036

(54) **UNIVERSAL OPTICAL FIBER**

(30) Priority: 17.06.2019 IN 201921023863
(62) Document number(s) of the earlier application(s) in accordance with Art. 76 EPC: 19189846.9 / 3 754 392
(71) Applicant: Sterlite Technologies Limited, 431 136 Maharashtra (IN)
(72) Inventor: Malaviya, Apeksha, 431136 Aurangabad, Maharashtra (IN); Munige, Sinivas Reddy, 431136 Aurangabad, Maharashtra (IN); Pandey, Anand Kumar, 431136 Aurangabad, Maharashtra (IN)
(74) Representative: Petraz, Gilberto Luigi

(57) **Abstract**

The present disclosure provides a universal optical fiber (100). The universal optical fiber (100) includes a core (102) extended from a central longitudinal axis (110) to a first radius r1. In addition, the universal optical fiber (100) includes a buffer clad (104) region extending from the first radius r1 to a second radius r2. Further, the universal optical fiber (100) includes a trench region (106) extending from the second radius r2 to a third radius r3. Furthermore, the universal optical fiber (100) includes a cladding (108) extending from the third radius to a fourth radius r4. Moreover, the core (102), the buffer clad region (104), the trench region (106) and the cladding (108) are concentrically arranged.

## Description

### FIELD OF INVENTION

. The present disclosure relates to the field of optical fiber transmission. More particularly, the present disclosure relates to a bend insensitive universal optical fiber having a trench region with a curve parameter. This application is based on, and claims priority from an Indian Application Number 201921023863 filed on 17th June 2019**.**

### BACKGROUND

. With the advancement of science and technology, various modern technologies are being employed for communication purposes. One of the most important modern communication technologies is optical fiber communication technology using a variety of optical fibers. Optical fiber is used to transmit information as light pulses from one end to another. One such type of optical fiber is a single mode optical fiber. The single mode optical fiber is used in FTTx and long haul communication. The telecommunication industry is continuously striving for designs to achieve high data rate capacity and low losses. The ongoing research suggests that the single mode optical fiber of G657 and G652D category are used for FTTx and long-haul applications. The single mode optical fiber of G652D and G657 categories faces major challenges in FTTx and long haul communication respectively. G652D fibers faces major challenges in FTTx application due to good macro bend losses and G657 category fibers face major challenges in long haul applications due to high nonlinear effects as a result of low MFD. Also Low MFD in G657A2 in long haul communication results in a power penalty more than 1.5 decibel as compared to G652D. Prior art reference US20110229101A1 embraces a single-mode optical fiber. The single mode optical fiber comprising a central core surrounded by an outer cladding, the central core having a radius r1 and a positive maximum refractive-index difference Δn1 with respect to said outer cladding; an intermediate cladding positioned between the central core and the outer cladding, the intermediate cladding having a radius r2 and a refractive-index difference Δn2 with respect to the outer cladding; and a buried trench positioned between the intermediate cladding and the outer cladding, the buried trench having a radius r3 and a negative refractive-index difference Δn3 with respect to the outer cladding. Prior art reference US20160209585A1 discloses an optical fiber including a core, and a clad formed on an outer circumference of the core, the clad includes an inner cladding layer adjacent to the core, a trench adjacent to an outer circumference of the inner cladding layer, and an outer cladding layer formed on an outer circumference of the trench, the core has a refractive index of Δ1 and a maximum refractive index of Δ1max, the inner cladding layer has a refractive index of Δ2 and a minimum refractive index of Δ2min, the trench has a refractive index of Δ3 and a minimum refractive index of Δ3min, the outer cladding layer has a refractive index of Δ4, and the refractive indices of the core, the inner cladding layer, the trench , and the outer cladding layer are in relationships denoted by Δ1 max>Δ2>Δ3min, Δ1max>Δ4>Δ3min and 0.01%<(Δ4-Δ3min)<0.03%. An outer circumference radius r1 of the core, an outer circumferential radius r2 of the inner cladding layer, an outer circumferential radius r3 of the trench, and an outer circumferential radius r4 of the outer cladding layer are in relationships denoted by r1 r2<r3<r4. Prior art reference US20120183268A1 discloses a single-mode optical fiber including a central core, an intermediate cladding, a depressed trench, and an external optical cladding. The central core has a radius r1 and a positive refractive index difference Δn1 with the optical cladding. The intermediate cladding has a radius r2 and a refractive index difference Δn2 with the optical cladding, wherein Δn2 is less than Δn1. The depressed trench has a radius r3 and a negative index difference Δn3 with the optical cladding. Prior art reference US20140185996A1 discloses a bend insensitive single-mode optical fiber including a core layer and cladding layers having an inner cladding layer, a trench cladding layer and an outer cladding layer sequentially formed surrounding the core layer from inside to outside. For the core layer, the diameter is 7-7.9 µm, and the relative refractive index difference Δ1 is between 4.6×10-3 and 6.5×10-3. For the inner cladding layer, the diameter is 16.5-20 µm, and a relative refractive index difference Δ2 is between -3×10-4 and 3×10-4. For the trench cladding layer, the diameter is 33-40 µm, and the relative refractive index difference Δ3 is between -2.9×10-3 and -7.3×10-3, changes in a gradient manner and increases gradually from outside to inside, where a relative refractive index difference Δ32 at an outermost interface is smaller than a relative refractive index difference Δ31 at an innermost interface. Prior art reference US20160139333A1 discloses a bend insensitive single-mode optical fiber including a core layer and cladding layers having an inner cladding layer, a trench cladding layer and an outer cladding layer sequentially formed surrounding the core layer from inside to outside. For the core layer, the diameter is 7-7.9 µm, and the relative refractive index difference Δ1 is between 4.6×10-3 and 6.0×10-3. For the inner cladding layer, the diameter is 15-17 µm, and a relative refractive index difference Δ2 is between -3×10-4 and 3×10-4. For the trench cladding layer, the diameter is 24-33 µm, and the relative refractive index difference Δ3 is between -2.9×10-3 and -7.3×10-3, changes in a gradient manner and increases gradually from outside to inside, where a relative refractive index difference Δ32 at an outermost interface is smaller than a relative refractive index difference Δ31 at an innermost interface. Prior art reference US20110058780A1 discloses a single mode fiber having a core, an inner cladding, a depressed cladding, and an outer cladding composed of pure silica glass. The core is surrounded in sequence with the inner cladding and the depressed cladding. The core has silica glass doped with germanium and fluorine, with a diameter (a) of 8.0-8.8 µm, a relative refractive index difference (Δ1) of 0.35-0.38%, The inner cladding has silica glass doped with germanium and fluorine, with a diameter (b) of 18-21 µm and a relative refractive index difference (Δ2) of 0±0.02%. The depressed cladding has silica glass doped with fluorine, with a diameter (c) of 26-36 µm and a relative refractive index difference (Δ32) at the external interface thereof is between -0.22 and -0.35%, and a relative refractive index difference (Δ31) at the internal interface thereof is between -0.20 and -0.35%, and Δ32≦Δ31. Prior art reference US20180120503A1 discloses an optical fiber comprising: (i) a core region comprising an outer radius r1, and 3.0≤r1≤7.0 microns and a relative refractive index Δ1max and 0.32%≤Δ1max≤0.5%; (b) a depressed index cladding region surrounding the core region comprising an outer radius r3 and a relative refractive index Δ3 less than -0.2%, and trench volume V3 wherein 45% Δ-micron2≤|V3|≤200% Δ-micron2; (c) a first outer cladding region surrounding the depressed index cladding region and comprising a relative refractive index Δ4 and an outer radius r4; and (d) a second outer cladding layer comprising 5 wt %-20 wt % titania, a relative refractive index Δ5, and a thickness TM, wherein 3 micron≤TM≤30 microns, and outer radius r5≤65 microns.

. In light of the above stated discussion, there is a need for a single mode optical fiber that overcomes the above sited drawbacks to use for FTTx as well as long haul and access networks.

### OBJECT OF THE DISCLOSURE

. A primary object of the present disclosure is to provide a universal optical fiber with bend insensitivity.

. Another object of the present disclosure is to provide the universal optical fiber with good macro-bend performances.

. Yet another object of the present disclosure is to provide the universal optical fiber with large mode field diameter.

. Yet another object of the present disclosure is to provide the universal optical fiber with large effective area.

### SUMMARY

. In an aspect of the present disclosure, the present disclosure provides a universal optical fiber. The universal optical fiber includes a core. In addition, the universal optical fiber includes a cladding. Further, the core is defined along a central longitudinal axis of the universal optical fiber. In addition, the core has a first radius r_{1.} Further, the cladding is defined by a third radius r₃ and a fourth radius r₄ of the universal optical fiber. Furthermore, the universal optical fiber has a mode field diameter. The mode field diameter of the universal optical fiber is in range of about 8.7 micrometer to 9.5 micrometer. Moreover, the universal optical fiber has at least one macro-bend loss up to 0.5 decibel per turn corresponding to wavelength of 1550 nanometer at bending radius of 7.5 millimeter, macro-bend loss up to 1.0 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter, macro-bend loss up to 0.03 decibel per 10 turn corresponding to wavelength of 1550 nanometer at bending radius of 15 millimeter and macro-bend loss up to 0.1 decibel per 10 turn corresponding to wavelength of 1625 nanometer at bending radius of 15 millimeter.

. In an embodiment of the present disclosure, the universal optical fiber includes a trench region. In addition, the trench region is defined by a second radius r₂ and the third radius r₃. Further, the trench region has a curve parameter α_{trench} in range of about 1.5 to 2.

. In an embodiment of the present disclosure, the core has a curve parameter α.

. In an embodiment of the present disclosure, the universal optical fiber includes a buffer clad region. In addition, the buffer clad region is defined by the second radius r₂ and the first radius r₁. Further, a first ratio of r₂/r₁ is in range of about 1.5 to 2.

. In an embodiment of the present disclosure, the universal optical fiber has at least one of a dispersion of up to 18 picosecond/(nanometer-kilometer) at wavelength of 1550 nanometer. In addition, the universal optical fiber has a zero dispersion wavelength in range of about 1300 nanometer to 1324 nanometer. Further, the universal optical fiber has a cable cut off wavelength of up to 1260 nanometer.

. In an embodiment of the present disclosure, the universal optical fiber has the core. The core has a first relative refractive index Δ₁ in range of about 0.35 to 0.40. Further, the core has the first radius r₁ in range of about 4.8 micron to 5.5 micron. In addition, the core has a curve parameter α in range of about 2.5 to 7.

. In an embodiment of the present disclosure, the universal optical fiber has a buffer clad region. The buffer clad region has a second relative refractive index Δ₂in range of about 0 to 0.04. Further, the buffer clad region has radius r₂ in range of about 7.2 micron to 11 micron.

. In an embodiment of the present disclosure, the universal optical fiber has a trench region. In addition, the trench region has a third relative refractive index Δ₃ in range of about -0.25 to -0.30. In addition, the trench region has the third radius r₃ in range of about 15 micron to 20 micron.

. In an embodiment of the present disclosure, the cladding has a fourth relative refractive index Δ₄. The fourth relative refractive index Δ₄ is zero. Furthermore, the cladding (108) has the fourth radius r₄ of about 62.5 micron.

. In an embodiment of the present disclosure, the buffer clad region has a second relative refractive index Δ₂ in range of about 0 to 0.04.

. In another aspect of the present disclosure, the present disclosure provides a universal optical fiber. The universal optical fiber includes a core. In addition, the universal optical fiber includes a cladding. Further, the core is defined along a central longitudinal axis of the universal optical fiber. In addition, the core has a first radius r_{1.} Further, the cladding is defined by a third radius r₃ and a fourth radius r₄ of the universal optical fiber. Furthermore, the universal optical fiber includes a trench region. In addition, the trench region is defined by a second radius r₂ and the third radius r₃. In addition, the trench region concentrically surrounds a buffer clad region. Further, the trench region has a curve parameter α_{trench}.

. In an embodiment of the present disclosure, the buffer clad region of the universal optical fiber concentrically surrounds the core of the universal optical fiber. In addition, the cladding of the universal optical fiber concentrically surrounds the trench region of the universal optical fiber. Further, the second relative refractive index Δ₂ of the buffer clad region is in range of about 0 to 0.04. Furthermore, the fourth relative refractive index Δ₄ of the cladding is zero.

. In an embodiment of the present disclosure, the universal optical fiber has a mode field diameter. The mode field diameter of the universal optical fiber is in range of about 8.7 micrometer to 9.5 micrometer. The universal optical fiber (100) has at least one of macro-bend loss up to 0.5 decibel per turn corresponding to wavelength of 1550 nanometer at bending radius of 7.5 millimeter, macro-bend loss up to 1.0 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter, macro-bend loss up to 0.03 decibel per 10 turn corresponding to wavelength of 1550 nanometer at bending radius of 15 millimeter and macro-bend loss up to 0.1 decibel per 10 turn corresponding to wavelength of 1625 nanometer at bending radius of 15 millimeter.

. In an embodiment of the present disclosure, the universal optical fiber has the core. The core has a first relative refractive index Δ₁. In addition, the first relative refractive index Δ₁ is in range of about 0.35 to 0.40. Further, the core has the first radius r₁. The first radius r₁ is in range of about 4.8 micron to 5.5 micron. In addition, the core has a curve parameter α in range of about 2.5 to 7. Further, the universal optical fiber has the buffer clad region. The buffer clad region has a second relative refractive index Δ₂. In addition, the second relative refractive index Δ₂ of buffer clad region is in range of about 0 to 0.04. Further, the buffer clad region has radius r₂. Furthermore, the second radius r₂ is in range of about 7.2 micron to 11 micron. Furthermore, the universal optical fiber has the trench region. In addition, the trench region has a third relative refractive index Δ₃. The third relative refractive index Δ₃ is in range of about -0.25 to -0.30. In addition, the trench region has the third radius r₃. Further, the third radius r₃ is in range of about 15 micron to 20 micron. Moreover, the universal optical fiber has the cladding. In addition, the cladding has a fourth relative refractive index Δ₄. Further, the fourth relative refractive index is zero. Furthermore, the cladding has the fourth radius r₄. Moreover, the fourth radius r₄ is about 62.5 micron.

. In an embodiment of the present disclosure, the universal optical fiber has a first ratio. In addition, the first ratio is a ratio of second radius r₂ of the buffer clad region and the first radius r₁ of the core of the universal optical fiber. Further, the first radius is in range of about 1.5 to 2.

. In an aspect of the present disclosure, the present disclosure provides a universal optical fiber. The universal optical fiber includes a core. In addition, the universal optical fiber includes a cladding. Further, the core is defined along a central longitudinal axis of the universal optical fiber. In addition, the core has a first radius r_{1.} Further, the cladding is defined by a third radius r₃ and a fourth radius r₄ of the universal optical fiber. Furthermore, the universal optical fiber has a mode field diameter. The mode field diameter of the universal optical fiber is in range of about 8.7 micrometer to 9.5 micrometer. Moreover, the universal optical fiber has at least one macro-bend loss up to 0.5 decibel per turn corresponding to wavelength of 1550 nanometer at bending radius of 7.5 millimeter, macro-bend loss up to 1.0 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter, macro-bend loss up to 0.03 decibel per 10 turn corresponding to wavelength of 1550 nanometer at bending radius of 15 millimeter and macro-bend loss up to 0.1 decibel per 10 turn corresponding to wavelength of 1625 nanometer at bending radius of 15 millimeter.

### BRIEF DESCRIPTION OF FIGURES

Having thus described the disclosure in general terms, reference will now be made to the accompanying figures, wherein:
**FIG. 1** illustrates a cross-sectional view of a universal optical fiber, in accordance with various embodiments of the present disclosure; and
**FIG. 2** illustrates a refractive index profile of the universal optical fiber, in accordance with various embodiments of the present disclosure.

It should be noted that the accompanying figures are intended to present illustrations of various embodiments of the present disclosure. These figures are not intended to limit the scope of the present disclosure. It should also be noted that accompanying figures are not necessarily drawn to scale.

### DETAILED DESCRIPTION

Reference will now be made in detail to selected embodiments of the present disclosure in conjunction with accompanying figures. The embodiments described herein are not intended to limit the scope of the disclosure, and the present disclosure should not be construed as limited to the embodiments described. This disclosure may be embodied in different forms without departing from the scope and spirit of the disclosure. It should be understood that the accompanying figures are intended and provided to illustrate embodiments of the disclosure described below and are not necessarily drawn to scale. In the drawings, like numbers refer to like elements throughout, and thicknesses and dimensions of some components may be exaggerated for providing better clarity and ease of understanding.

It should be noted that the terms "first", "second", and the like, herein do not denote any order, ranking, quantity, or importance, but rather are used to distinguish one element from another. Further, the terms "a" and "an" herein do not denote a limitation of quantity, but rather denote the presence of at least one of the referenced item.

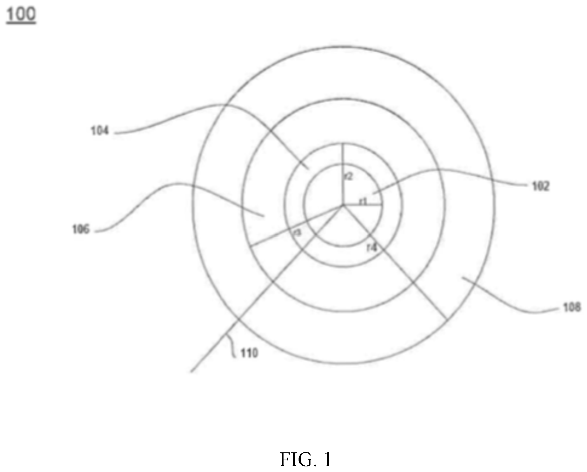

**FIG. 1** illustrates a cross-sectional view of a universal optical fiber 100, in accordance with various embodiments of the present disclosure. In general, optical fiber is a thin strand of glass or plastic capable of transmitting optical signals. In an embodiment of the present disclosure, the universal optical fiber 100 is configured to transmit information over long distances with low non-linear effects as compared to G657A2 and good macro-bend performance.

The universal optical fiber **100** includes a core **102,** a cladding **108,** a buffer clad region **104** and a trench region **106.** In general, core is an inner part of an optical fiber and cladding is an outer part of the optical fiber. In an embodiment of the present disclosure, the core **102** is defined along a central longitudinal axis **110** of the universal optical fiber **100.** The central longitudinal axis **110** is an imaginary axis.

Further, the core **102,** the cladding **108,** the buffer clad region **104** and the trench region **106** of the universal optical fiber **100** are associated with a refractive index profile. In general, the refractive index profile is maintained as per required level based on concentration of chemicals used for manufacturing of an optical fiber. In addition, the chemicals used for manufacturing of the optical fiber include one or more materials and one or more dopants. Further, the one or more materials and the one or more dopants are deposited over surface of initial material with facilitation of flame hydrolysis. Furthermore, the initial material is a substrate rod or a tube.

In an embodiment of the present disclosure, the refractive index profile determines relationship between a refractive index of the universal optical fiber **100** and a radius of the universal optical fiber **100.** In addition, the radius of the universal optical fiber **100** corresponds to a first radius r₁, a second radius r₂, a third radius r₃ and a fourth radius r₄. In an embodiment of the present disclosure, manufacturing of the universal optical fiber **100** is carried out after manufacturing of a preform. Further, the refractive index profile of the universal optical fiber **100** is determined during manufacturing of the preform of the universal optical fiber **100.**

In an embodiment of the present disclosure, the core **102** of the universal optical fiber **100** has a first relative refractive index Δ₁. In addition, the core **102** has maximum refractive index nₘₐₓ. Further, the core **102** has a curve parameter α (alpha). Furthermore, the core **102** of the universal optical fiber **100** has the first radius r₁. In an embodiment of the present disclosure, the first radius r₁ is in range of about 4.8 micron to 5.5 micron. In another embodiment of the present disclosure, range of the first radius r₁ of the core **102** may vary. In an example, the core **102** has a first radius of about 4.92 micron. In another example, the core has the first radius of about 4.95 micron. In yet another example, the first radius has a value of about 5.3 micron. In an embodiment of the present disclosure, the core **102** has the first relative refractive index Δ₁ in range of about 0.35 to 0.40. In another embodiment of the present disclosure, range of the first relative refractive index Δ₁ may vary. In an example, the first relative refractive index Δ₁ has a value of 0.36. In another example, the first relative refractive index Δ₁ has a value of 0.38. In an embodiment of the present disclosure, the curve parameter alpha α is in range of about 3 to 6. In another embodiment of the present disclosure, range of the curve parameter alpha α may vary. In an example, the value of alpha α is 3. In another example the value of alpha α is 5. In yet another example, the value of alpha α is 6.

The expression used for calculating the relative refractive index is produced below: $Δ i = 100 \times \left(\frac{{n}_{i}^{2} - {n}_{clad}^{2}}{2 \times {n}_{i}^{2}}\right)$ wherein,
*n_{clad}*: refractive index of the pure silica;
*nᵢ*: refractive index of the iₜₕ layer;
Δi: the relative refractive index of iₜₕ layer.

In an embodiment of the present disclosure, the refractive index profile changes between the second radius r₂ and the fourth radius r₄ of the universal optical fiber **100**. Further, the relative refractive index of the core **102**, the cladding **108**, the buffer clad region **104** and the trench region **106** has a pre-defined value. Furthermore, the radius of the core **102**, the cladding **108**, the buffer clad region **104** and the trench region **106** has a pre-defined value. In an embodiment of the present disclosure, the pre-defined values of the relative refractive index is set to obtain good macro-bend performance and reduce non-linear effects as compared to G657A2.

In an embodiment of the present disclosure, the buffer clad region **104** is defined by the first radius r₁ and the second radius r₂ from the central longitudinal axis **110** of the universal optical fiber **100**. The buffer clad region **104** has a second relative refractive index Δ₂. Further, the trench region **106** is defined bythe second radius r₂ and the third radius r₃ from the central longitudinal axis **110** of the universal optical fiber **100**. The trench region **106** has a third relative refractive index Δ₃. Furthermore, the cladding **108** is defined by the third radius r₃ and the fourth radius r_{4.} Moreover, the cladding **108** has a fourth relative refractive index of Δ_{4.}

In an embodiment of the present disclosure, the buffer clad region **104** of the universal optical fiber **100** has the second radius r₂ in range of about 7.2 micron to 11 micron. In another embodiment of the present disclosure, range of the second radius r₂ may vary. In an example, the the second radius r₂ has a value of 8.364 micron. In another example, the second radius r₂ has a value of 8.91 micron. In yet another example, the second radius r₂ has a value of 9.01 micron. In an embodiment of the present disclosure, the buffer clad region **104** of the universal optical fiber **100** has the second relative refractive index Δ₂ is in range of about 0 to 0.04. In another embodiment of the present disclosure, the second relative refractive index Δ₂ of the buffer clad region **104** of the universal optical fiber **100** may vary. In an example, the second relative refractive index Δ₂ has a value of 0. In another example, the second relative refractive index Δ₂ has a value of 0.02. In yet another example, the second relative refractive index Δ₂ has a value of 0.04.

In an embodiment of the present disclosure, the trench region **106** of the universal optical fiber **100** has the third radius r₃ in range of about 15 micron to 20 micron. In another embodiment of the present disclosure, range of the third radius r₃ may vary. In an example, the third radius r₃ has a value of 15.5. In another example, the third radius r₃ has a value 17. In yet another example, the third radius r₃ has value of about 19. In an embodiment of the present disclosure, the trench region **106** of the universal optical fiber **100** has the third relative refractive index Δ₃ is in range of about -0.25 to -0.30. In another embodiment of the present disclosure, range of the third relative refractive index Δ₃ may vary. In an example, the third relative refractive index Δ₃ has a value of about -0.29. In another example, the third relative refractive index Δ₃ has a value of about -0.26. In yet another example, the third relative refractive index Δ₃ has a value of about -0.28. In an embodiment of the present disclosure, the trench region **106** includes a curve parameter α_{trench} about 1.5. In another embodiment of the present disclosure, value of the curve parameter α_{trench} may vary. In an example, the curve parameter α_{trench} has a value of 1.9. In another example, the curve parameter α_{trench} has a value of about 1.6. In yet another example, the curve parameter α_{trench} has a value of about 1.7.

In an embodiment of the present disclosure, the cladding **108** of the universal optical fiber **100** has the fourth radius r₄ of about 62.5 micron. In another embodiment of the present disclosure, value of the fourth radius r₄ may vary. In an embodiment of the present disclosure, the cladding **108** has the fourth relative refractive index Δ₄ of zero. In another embodiment of the present disclosure, the fourth relative refractive index Δ₄ of the cladding **108** of the universal optical fiber **100** may vary.

In an embodiment of the present disclosure, the core **102** of the universal optical fiber **100** has maximum refractive index n_{max.} In addition, the buffer clad region **104** has refractive index of pure silica n_{clad}. Further, minimum refractive index of the trench region **106** is n_{trench}. Furthermore, expressions used to determine refractive index is given by below: $\begin{matrix}n \left(r\right) = {n}_{max} {\left[1-2Δ1{\left(\frac{r}{R 1}\right)}^{α}\right]}^{0.5} \\ for r \leq {r}_{1}\end{matrix}$ $n \left(r\right) = {n}_{clad}$ $\begin{matrix}for {r}_{1} \leq {r}_{1} \leq {r}_{2} and r \geq {r}_{3} \\ n \left(r\right) = {n}_{clad} - {n}_{trench} {\left[1+2Δ3{\left(\frac{\left(R3-r\right)}{\left(R3-R2\right)}\right)}^{{α}_{trench}}\right]}^{0.5} \\ for {r}_{2} \leq r \leq {r}_{3}\end{matrix}$

In an embodiment of the present disclosure, the refractive index profile of the universal optical fiber **100** low non-linear effects as compared to G657A2 and good macro-bend performance. Further, the universal optical fiber **100** has large mode field diameter and large effective area.

In an embodiment of the present disclosure, the universal optical fiber **100** has the mode field diameter in range of about 8.7 micron to 9.5 micron at wavelength of 1310 nanometer. In another embodiment of the present disclosure, range of the mode field diameter of the universal optical fiber **100** may vary. In general, mode field diameter defines a section or area of optical fiber in which the optical signals travel. In an embodiment of the present disclosure, the cladding **108** of the universal optical fiber **100** has a diameter in range of about 124.3 micron to 125.7 micron. In another embodiment of the present disclosure, the diameter of the cladding **108** of the universal optical fiber **100** may vary.

In an embodiment of the present disclosure, the universal optical fiber **100** has a cable cut off wavelength of up to 1260 nanometer. In another embodiment of the present disclosure, the cable cut off wavelength of the universal optical fiber **100** may vary. In an embodiment of the present disclosure, the universal optical fiber **100** has a zero dispersion wavelength in range of about 1300 nanometer to 1324 nanometer. In another embodiment of the present disclosure, range of the zero dispersion wavelength of the universal optical fiber **100** may vary.

In an embodiment of the present disclosure, the universal optical fiber **100** has a dispersion of up to 18 picosecond/(nanometer-kilometer). In another embodiment of the present disclosure, the dispersion of the universal optical fiber **100** may vary.

The universal optical fiber **100** has macro-bend loss in complaint to the ITUT G657.A2. In general, bending loss is a loss that occurs when optical fiber is bent. In addition, bending loss includes macro-bend loss and a micro-bend loss. Moreover, the universal optical fiber **100** has at least one macro-bend loss up to 0.5 decibel per turn corresponding to wavelength of 1550 nanometer at bending radius of 7.5 millimeter, macro-bend loss up to 1.0 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter, macro-bend loss up to 0.03 decibel per 10 turn corresponding to wavelength of 1550 nanometer at bending radius of 15 millimeter and macro-bend loss up to 0.1 decibel per 10 turn corresponding to wavelength of 1625 nanometer at bending radius of 15 millimeter.

In general, bending radius is a minimum radius of the inner curvature formed on bending optical fiber.

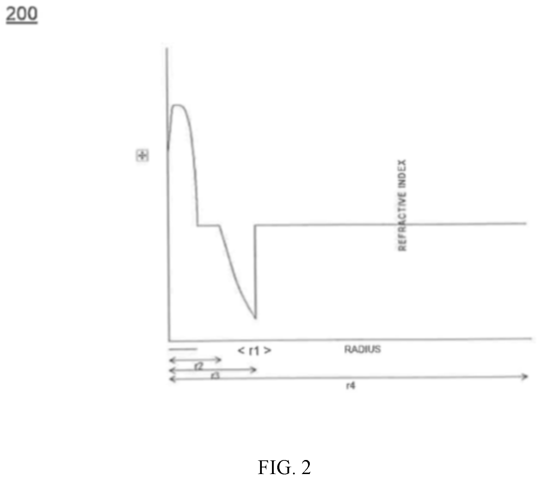

**FIG. 2** illustrates the refractive index profile **200** of the universal optical fiber **100**, in accordance with various embodiments of the present disclosure. The refractive index profile **200** illustrates relationship between the refractive index of the universal optical fiber **100** and the radius of the universal optical fiber **100** (as shown in **FIG. 1**). In an embodiment of the present disclosure, the refractive index profile **200** shows change in the relative refractive index of the core **102**, the buffer clad region **104**, the trench region **106** and the cladding **108** with the radius of the universal optical fiber **100**.

In an embodiment of the present disclosure, the universal optical fiber **100** has a first ratio. In addition the first ratio is ratio of the second radius r₂ of the buffer clad region **104** to the first radius r₁ of the core **102** of the universal optical fiber **100**. In an embodiment of the present disclosure, the first ratio of the universal optical fiber **100** is in range of about 1.5 to 2. In another embodiment of the present disclosure, range of the first ratio of the universal optical fiber **100** may vary. In an example, the first ratio of the universal optical fiber **100** has a value of about 1.7. In another example, the first ratio of the universal optical fiber **100** has a value of about 1.8.

In addition, the universal optical fiber **100** has the mode field diameter. In an example, the mode field diameter is about 9.08 micron at wavelength of 1310 nanometer. In another example, the mode field diameter is about 9.12 micron at wavelength of 1310 nanometer. Further, the universal optical fiber **100** has the zero dispersion wavelength. In an example, the zero dispersion wavelength is about 1308 nanometer. In another example, the zero dispersion wavelength is about 1300 nanometer. In yet another example, the zero dispersion wavelength is about 1313 nanometer. In yet another example, the zero dispersion wavelength is about 1317 nanometer. Furthermore, the universal optical fiber **100** has the dispersion. In an example, the dispersion is about 15 picosecond/(nanometer-kilometer) at wavelength of 1550 nanometer. In another example, the dispersion is about 17.3 picosecond/(nanometer-kilometer) at wavelength of 1550 nanometer. In yet another example, the dispersion is about 15 picosecond/(nanometer-kilometer) at wavelength of 1550 nanometer. In yet another example, the dispersion is about 17 picosecond/(nanometer-kilometer) at wavelength of 1550 nanometer.

Moreover, the universal optical fiber **100** has the cable cut off wavelength. In an example, the cable cutoff wavelength is about 1206 nanometer. In another example, the cable cutoff wavelength is about 1230 nanometer. In yet another example, the cable cutoff wavelength is about 1240 nanometer. In yet another example, the cable cutoff wavelength is about 1210 nanometer. Also, the universal optical fiber **100** is associated with macro-bend loss. In an example, macro-bend loss of the universal optical fiber **100** is about 0.047 decibel per turn corresponding to wavelength of 1550 nanometer at bending radius of 7.5 millimeter. In another example, macro-bend loss of the universal optical fiber **100** is about 0.121 decibel per turn corresponding to wavelength of 1550 nanometer at bending radius of 7.5 millimeter. In yet another example, macro-bend loss of the universal optical fiber **100** is about 0.168 decibel per turn corresponding to wavelength of 1550 nanometer at bending radius of 7.5 millimeter. In yet another example, macro-bend loss of the universal optical fiber **100** is about 0.25 decibel per turn corresponding to wavelength of 1550 nanometer at bending radius of 7.5 millimeter.

In an example, macro-bend loss of the universal optical fiber **100** is about 0.107 decibel per turn corresponding to wavelength of 1625 nanometer at bending radius of 7.5 millimeter. In another example, macro-bend loss of the universal optical fiber **100** is about 0.26 decibel per turn corresponding to wavelength of 1625 nanometer at bending radius of 7.5 millimeter. In yet another example, macro-bend loss of the universal optical fiber **100** is about 0.53 decibel per turn corresponding to wavelength of 1625 nanometer at bending radius of 7.5 millimeter. In yet another example, macro-bend loss of the universal optical fiber **100** is about 0.363 decibel per turn corresponding to wavelength of 1625 nanometer at bending radius of 7.5 millimeter.

In an example, macro-bend loss of the universal optical fiber **100** is about 0.013 decibel per turn corresponding to wavelength of 1550 nanometer at bending radius of 10 millimeter. In another example, macro-bend loss of the universal optical fiber **100** is about 0.031 decibel per turn corresponding to wavelength of 1550 nanometer at bending radius of 10 millimeter. In yet another example, macro-bend loss of the universal optical fiber **100** is about 0.047 decibel per turn corresponding to wavelength of 1550 nanometer at bending radius of 10 millimeter. In yet another example, macro-bend loss of the universal optical fiber **100** is about 0.035 decibel per turn corresponding to wavelength of 1550 nanometer at bending radius of 10 millimeter.

In an example, macro-bend loss of the universal optical fiber **100** is about 0.035 decibel per turn corresponding to wavelength of 1625 nanometer at bending radius of 10 millimeter. In another example, macro-bend loss of the universal optical fiber **100** is about 0.086 decibel per turn corresponding to wavelength of 1625 nanometer at bending radius of 10 millimeter. In yet another example, macro-bend loss of the universal optical fiber **100** is about 0.139 decibel per turn corresponding to wavelength of 1625 nanometer at bending radius of 10 millimeter. In yet another example, macro-bend loss of the universal optical fiber **100** is about 0.103 decibel per turn corresponding to wavelength of 1625 nanometer at bending radius of 10 millimeter.

In an example, macro-bend loss of the universal optical fiber **100** is about 0.007 decibel per 10 turn corresponding to wavelength of 1550 nanometer at bending radius of 15 millimeter. In another example, macro-bend loss of the universal optical fiber **100** is about 0.015 decibel per 10 turn corresponding to wavelength of 1550 nanometer at bending radius of 15 millimeter. In yet another example, macro-bend loss of the universal optical fiber **100** is about 0.016 decibel per 10 turn corresponding to wavelength of 1550 nanometer at bending radius of 15 millimeter. In yet another example, macro-bend loss of the universal optical fiber **100** is about 0.013 decibel per 10 turn corresponding to wavelength of 1550 nanometer at bending radius of 15 millimeter.

In an example, macro-bend loss of the universal optical fiber **100** is about 0.034 decibel per 10 turn corresponding to wavelength of 1625 nanometer at bending radius of 15 millimeter. In another example, macro-bend loss of the universal optical fiber **100** is about 0.069 decibel per 10 turn corresponding to wavelength of 1625 nanometer at bending radius of 15 millimeter. In yet another example, macro-bend loss of the universal optical fiber **100** is about 0.076 decibel per 10 turn corresponding to wavelength of 1625 nanometer at bending radius of 15 millimeter. In yet another example, macro-bend loss of the universal optical fiber **100** is about 0.062 decibel per 10 turn corresponding to wavelength of 1625 nanometer at bending radius of 15 millimeter.

The present disclosure provides numerous advantages over the prior art. The present disclosure provides the universal optical fiber with bend insensitiveness. In addition, the present disclosure provides an optical fiber of G652D category with the bend performance in compliance with G657 category fibers. Further, the present disclosure provides the optical fiber that can be used in FTTX and long haul and access networks. Further, the universal optical fiber has large mode field diameter and effective area. Further, the universal optical fiber has improved macro-bend performance. Furthermore, the universal optical fiber has low non-linear effects as compared to the ITUT G657A2 category.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

## Claims

1. A universal optical fiber (100) comprising:
a core (102), wherein the core (102) is defined along a central longitudinal axis (110) of the universal optical fiber (100), wherein the core (102) has a first radius r₁ and a relative refractive index Δ₁;
a cladding (108), wherein the cladding (108) is defined by a third radius r₃ and a fourth radius r₄ of the universal optical fiber (100) and has a relative refractive index Δ₄ lesser than the relative refractive index Δ₁; and
a trench region (106), wherein the trench region (106) is defined between a second radius r₂ and the third radius r₃, and has a relative refractive index Δ₃, and wherein the relative refractive index Δ₃ is less than the relative refractive index Δ₄ and is a negative refractive index,
**characterized in that** the trench region (106) includes a curve parameter α_{trench} in a range of 1.5-1.9.

2. The universal optical fiber (100) as claimed in claim 1, wherein a first ratio of r₂/r₁ is in range of 1.5 to 2.

3. The universal optical fiber (100) as claimed in claim 1, wherein the universal optical fiber (100) has at least one of a dispersion of up to 18 picosecond/(nanometer-kilometer) at wavelength of 1550 nanometer, a zero dispersion wavelength in a range of about 1300 nanometer to 1324 nanometer and a cable cut off wavelength of up to 1260 nanometer.

4. The universal optical fiber (100) as claimed in claim 1, wherein the core (102) has at least one of:
a. a first relative refractive index Δ₁ in range of about 0.35 to 0.40; and
b. the first radius r₁ in range of about 4.8 micron to 5.5 micron.

5. The universal optical fiber (100) as claimed in claim 1, further comprising a buffer clad region (104), wherein the buffer clad region (104) has at least one of:
a. a second relative refractive index Δ2 in range of about 0 to 0.04; and
b. a second radius r2 in range of about 7.2 micron to 11 micron.

6. The universal optical fiber (100) as claimed in claim 1, further comprising a trench region (106), wherein the trench region (106) has at least one of:
a. a third relative refractive index Δ₃ in range of about -0.25 to -0.30; and
b. the third radius r₃ in range of about 15 micron to 20 micron.

7. The universal optical fiber (100) as claimed in claim 1, wherein the cladding (108) has at least one of:
a. a fourth relative refractive index Δ₄, wherein the fourth relative refractive index is zero; and
b. the fourth radius r₄, wherein the fourth radius r4 is about 62.5 micron.

8. The universal optical fiber (100) as claimed in claim 1, further comprising:
a buffer clad region (104) concentrically surrounding the core (102), wherein the buffer clad region is defined between the first radius r₁ and the second radius r₂ and has a relative refractive index Δ₂ less than the relative refractive index Δ₁;
wherein the universal optical fiber (100) has a mode field diameter in range of about 8.7 micrometer to 9.5 micrometer, and
wherein the universal optical fiber (100) has at least one of macro-bend loss up to 0.5 decibel per turn corresponding to wavelength of 1550 nanometer at bending radius of 7.5 millimeter, macro-bend loss up to 1.0 decibel per turn corresponding to wavelength of 1625 nanometer at bending radius of 7.5 millimeter, macro-bend loss up to 0.1 decibel per turn corresponding to wavelength of 1550 nanometer at bending radius of 10 millimeter, macro-bend loss up to 0.2 decibel per turn corresponding to wavelength of 1625 nanometer at bending radius of 10 millimeter and macro-bend loss up to 0.03 decibel per 10 turn corresponding to wavelength of 1550 nanometer at bending radius of 15 millimeter, and macro-bend loss is up to 0.1 decibel per 10 turn corresponding to wavelength of 1625 nanometer at bending radius of 15 millimeter.

9. The universal optical fiber (100) as claimed in claim 1, wherein the buffer clad region (104) of the universal optical fiber (100) concentrically surrounds the core (102) of the universal optical fiber (100), wherein the cladding (108) of the universal optical fiber (100) concentrically surrounds the trench region (106) of the universal optical fiber (100), wherein the second relative refractive index Δ₂ of the buffer clad region (104) is in range of about 0 to 0.04, wherein the fourth relative refractive index Δ₄ of the cladding (108) is zero.
